# EUROPEAN PATENT SPECIFICATION

(11) **EP 1 162 906 B1**
(45) Date of publication and mention of the grant of the patent: **10.09.2003**
(21) Application number: 00910283.1
(22) Date of filing: 22.02.2000
(51) Int. Cl.: A47J 43/04, A47J 43/10

(54) **MIXING CONTAINER**
MISCHBEHÄLTER
CONTENANT MELANGEUR

(30) Priority: 26.02.1999 US 258538
(43) Date of publication of application: 19.12.2001
(73) Proprietor: Columbia Insurance Company, Omaha, Nebraska 68131 (US)
(72) Inventor: GARTZ, Mark, R., Mount Prospect, IL 60056 (US); PHIPPS, Daniel, A., Round Lake, IL 60073 (US)
(74) Representative: Vossius, Corinna
(86) International application number: PCT/US00/04536
(87) International publication number: WO 00/049929

(56) References cited:
- WO-A-94/27714
- US-A- 632 780
- US-A- 1 744 328
- US-A- 2 010 534
- US-A- 2 291 708
- US-A- 2 726 071
- US-A- 4 946 286
- US-A- 5 580 169
- US-A- 5 695 282
- US-A- 5 780 087

## Description

### Technical Field of the Invention

This invention relates to a container and more particularly to a container having a mixing apparatus for forming a mixture using ingredients disposed on the container, according to the pre-characterising part of independent claim 1.

### Background of the Invention

It is well known that in preparing mixtures, including cocktails, mixed drinks, edible condiments, including salad dressings and the like, the proper proportion of ingredients, and the mixing or blending thereof, are important. A number of prior art patents have recognized this need and proposed containers that provide for proper mixing or blending. Typical patents in this area include U.S. Patent Nos. 632 780 (which formes a basis for the pre-characterising part of independent claim 1), 2,266,186, 2,484,391 and 5,580,169.

Additionally, it is a common expedient to use a container to store the mixture, which may settle or separate during such storage, especially if the mixture includes solids. Such separated mixtures require additional blending prior to use. U.S. Patent No. 4,359,283 discloses a representative device.

However, these prior art devices are not without their drawbacks. It is not uncommon for prior art devices to include only a mixing assembly, requiring the user to supply his own container. Those devices that do include containers generally fail to provide measuring indicia and a list of ingredients/directions, requiring the user to provide both a separate measuring device and a list of ingredients/directions.

Finally, while some prior art devices include a container which may have indicia markings, they fail to provide a mixing device that provides for proper blending and good mixture flow during mixing or blending. This is especially true for containers that are used to store a mixture.

### Summary of the Invention

The problems mentioned above are solved by the device according to independent claim 1.

The subject invention relates to a new and useful multi-use container that provides for proper mixing or blending of a mixture, where the container has measuring indicia and ingredients/directions disposed thereon.

The container includes a housing and mixing assembly having a mixing device. The housing has an opened end and an opposed closed end, with the mixing assembly in communication with the housing. The mixing device includes a whisk portion which is guidingly supported in the mixing assembly and configured for reciprocal movement.

In one preferred embodiment, the mixing assembly includes a rod configured for reciprocal and rotational movement in the housing, where the rod has a gripping portion attached to one end and a plunger to the other.

The mixing device, including the plunger, has a main body portion connected to the rod and a whisk portion formed on a periphery of the main body portion. The whisk portion comprises a plurality of spirally wound mixing elements.

Additionally, the mixing device includes at least one, but preferably more, apertures formed in the main body portion. The cooperative relationship of the apertures and the whisk portion provides for an increased mixture flow during mixing. This is especially important if the container and mixing assembly are used to store a mixture that has settled.

Various other objects, aims, purposes, features, advantages, embodiments, variations, and the like will be apparent to those skilled in the art from the teachings of the present specification taken with the associated drawings and appended claims.

### Brief Description of the Drawings

In the drawings,
FIG. 1 is a perspective view of a container having a mixing assembly in accordance with the present invention;
FIG. 2 is a top plan view of the container of FIG. 1 depicting the top portion of the mixing assembly therein in accordance with the present invention;
FIG. 3 is an elevational side view of the container of FIG. 1 partially in section taken substantially along line III-III of FIG. 1;
FIG. 4 is an elevational side view of the container of FIG. 1 depicting the mixing device of the mixing assembly in a raised mixing position in accordance with the present invention;
FIG. 5 is a bottom plan view of the container of FIG. 1 depicting the mixing device of the mixing assembly in accordance with the present invention;
FIG. 6 is an elevational side view of the mixing assembly in accordance with the present invention; and
FIG. 7 is an end view of the mixing device of the mixing assembly of FIG. 6 in accordance with the present invention.

### Description of the Preferred Embodiment

While this invention is susceptible to embodiments in many different forms, this specification and the accompanying drawings disclose only preferred forms as examples of the invention. The invention is not intended to be limited to the embodiments so described, however. The scope of the invention is identified in the appended claims.

Embodiments of the contemplated device illustrated in the figures show details of mechanical elements well known in the art and will be recognized by those skilled in the art as such. The detailed description is not necessary to the understanding of the invention. Accordingly, such elements are herein represented only to the degree necessary to aid in an understanding of the features of the present invention.

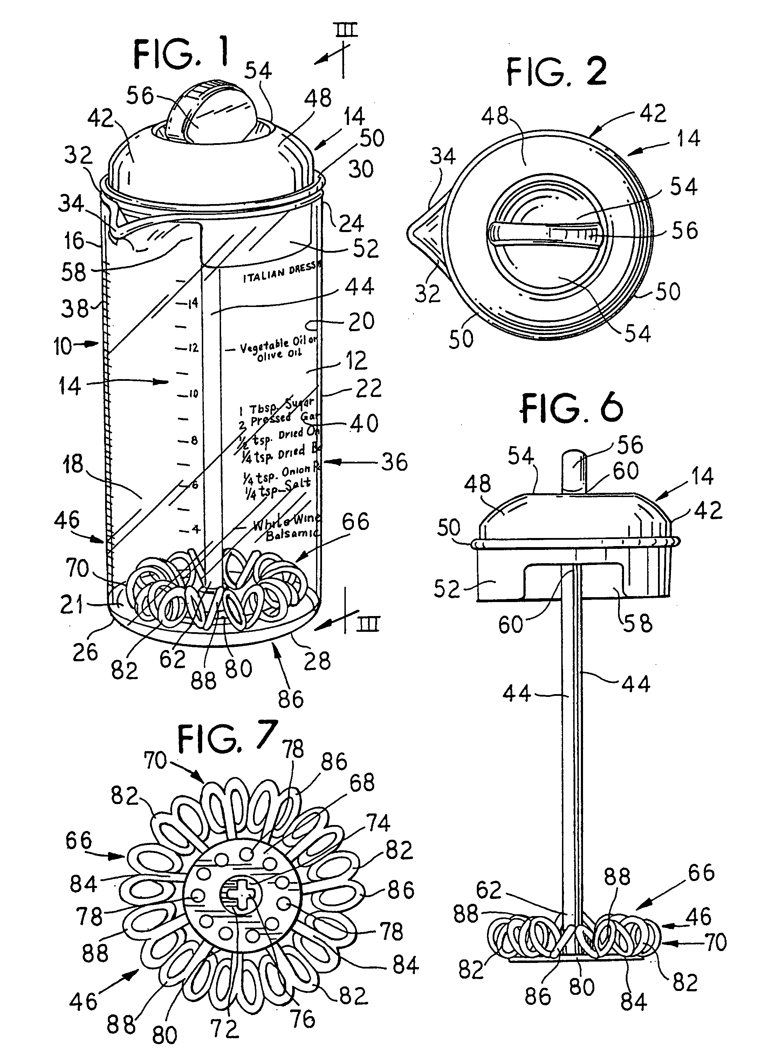

A method and device is provided for forming a mixture in a multi-use container, generally designated 10, suitable for use in accordance with the present invention. Turning to FIG. 1, container 10 is shown comprised of at least two components, a housing 12 and a mixing assembly 14.

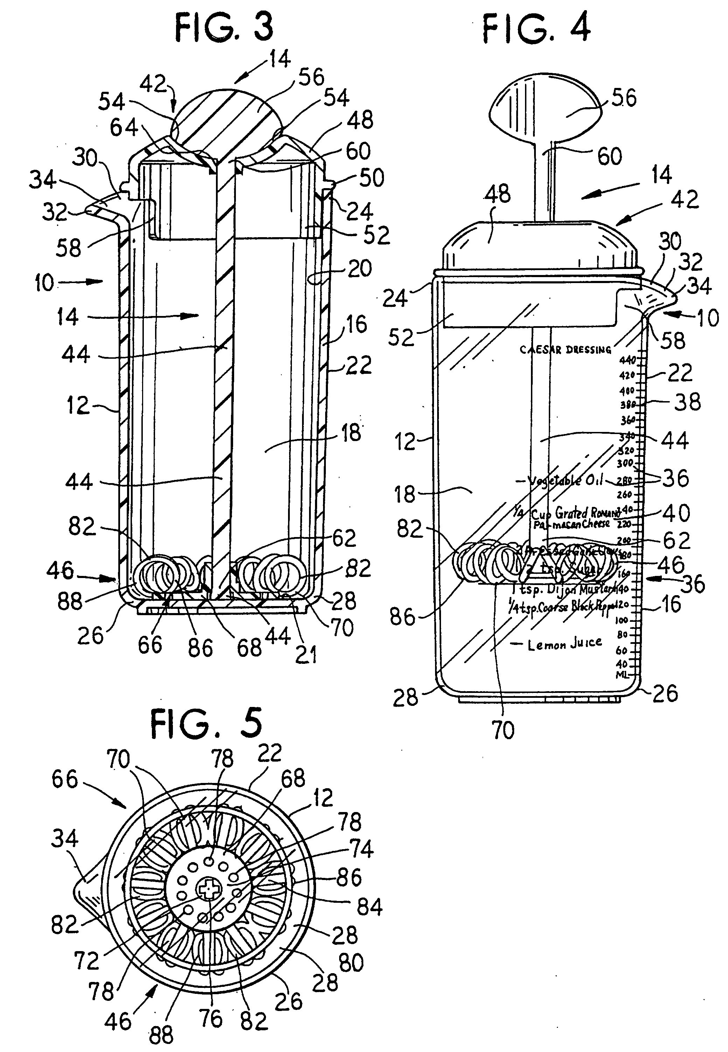

As best seen in FIGs. 1 and 4, housing 12, preferably made of a rigid plastic material suitable for injection molding, has a generally tubular shape and is configured to receive a material to be mixed. Further, housing 12 has a circular shape when viewed from above or below (best seen in FIGs. 2 and 5). Although the generally tubular, circular shape and use of rigid plastic material is preferred, other configurations and materials are contemplated, depending on the configuration.

A generally tubular wall 16 in the housing 12 defines a chamber 18 via an inner side surface 20 and inner bottom surface 21. Housing 12 further includes an outer surface 22 with an upper edge 24 and a lower edge 26 adjacent closed end 28. The tubular wall 16 has at least one opening, open end 30 defined by upper edge 24 opposite closed end 28. In one preferred embodiment, upper edge 24 includes a lip 32, where upper edge 24, lip 32 and tubular wall 14 define a projecting pouring spout 34.

In one preferred embodiment, container 10 preferably includes markings disposed thereon (best seen in FIGs. 1 and 4). Markings 36 are preferably comprised of measuring indica 38 and ingredients/directions 40 disposed on housing 12. In the embodiment shown in FIGs. 1 and 4, measuring indica 38 includes opposed measuring marks, preferably including both standard English and Metric measurements. Directions 40 on the other hand, include the ingredients and directions for forming the mixture, preferably a salad dressing or other condiment. However directions for other mixtures are contemplated, including drink mixes, cocktails, medicinal mixtures, irrigation solutions, etc. While a container10 including both measuring indica 38 and directions 40 is preferred, an embodiment having only one such marking 36 is contemplated. Moreover, it is contemplated that markings 36 could be formed on inner side surface 20 or outer surface 22 in any suitable manner.

In one preferred embodiment, mixing assembly 14, shown in removable and replaceable communication with housing 12 at open end 30, is comprised of at least a top portion 42, an elongated rod 44 and a mixing device 46.

As best viewed in FIGs. 1 and 6, top portion 42 has a cup-like appearance when viewed from the side, and round when viewed from above (best seen in FIG. 2). Top portion 42 includes a cap 48, lip 50 and depending skirt 52. In the depicted embodiment, top portion 42 is a single unit comprised of rigid plastic suitable for injection molding, but other assemblies, shapes and materials are contemplated.

Cap 48 is formed with a center depression 54, best seen in FIG. 3, adapted for receiving a gripping portion 56, discussed below. Additionally, top portion 42 is adapted to be received in open end 30 in a removable, replaceable manner, where depending skirt 52 forms a tight friction fit with inner side surface 20 and lip 50 engages lip 32 in an airtight manner. It is further contemplated that depending skirt 52 include at least one aperture 58 defined therein which, when aligned and in fluid communication with projecting pouring spout 34, allows the mixture to be poured from the container 10.

As is obvious from the figures, mixing assembly 14 includes rod 44 having opposed first and second ends 60 and 62, where rod 44 is guidingly supported by at least one aperture 64 defined in top portion 42. In a preferred embodiment, aperture 64 is defined in center depression 54 of cap 48 (best seen in FIG. 3). Rod 44 further includes elliptical shaped gripping portion 56 attached to and contiguous with first end 60. Moreover, it is contemplated that gripping portion 56 include finger indents to assure a good grip.

Turning now to FIG. 2, a top view of the container 10 is depicted. Top portion 42, including cap 48, is shown in operable communication with open end 30 in a replaceable, removable manner.

Cap 48 is depicted with center depression 54 adapted to receive gripping portion 56. Top portion 42 is adapted to be received in open end 30 in a removable, replaceable manner, where depending skirt 52 forms a tight friction fit with inner side surface 20, in addition to lip 50 engaging lip 32 in an airtight manner. Furthermore, projecting pouring spout 34, aligned with and in fluid communication with the least one aperture 58, provides a method for pouring the mixture from the container 10.

It is further contemplated that cap 48 may be rotated in housing 12 so that projecting pouring spout 34 is not aligned with and not in fluid communication with the least one aperture 58. This arrangement, along with the airtight seal formed by lips 32, 50 and tight friction fit of the depending skirt 52 and inner side surface 20, would prevent the mixture from being poured from the container 10. This arrangement is useful for storing a mixture in container 10.

An elevational side view of container 10 is depicted partially in section in FIG. 3 taken substantially along line III-III of FIG. 1. It is noted that mixing device 46 is attached to and contiguous with second end 62, opposite the gripping portion 56. Preferably mixing device 46 is configured for reciprocal and rotational movement in housing 12 and includes a plunger portion 66 having a main body portion 68 and a whisk portion 70 in operable communication with rod 44.

As shown in FIG. 3, rod 44, gripping portion 56 and mixing device 46 are preferably one integral piece made of a rigid plastic material suitable for injection molding. While one piece is preferred, two or more pieces joined together by gluing, bonding or the like are contemplated. Moreover, while rigid plastic is preferred, other materials, and or shapes, are contemplated.

The interrelationship of plunger portion 66, main body portion 44 and whisk portion 70 may be better understood upon reviewing FIGs. 5 and 7. FIG. 5 depicts a bottom view of container 10 with the mixing device 46 of mixing assembly 14 disposed therein. FIG. 7 depicts only the mixing device 46 of mixing assembly 14.

Mixing device 46 is shown in operable communication with rod 44. In the depicted embodiment, main body portion 68 is formed with a depressed center section 72 on bottom surface 74. Main body portion 68 is joined to and integral with second end 62 of rod 44 and preferably includes brace portion 76 formed in depressed center section 72 for support.

FIGs. 5 and 7 further reveal that main body portion 68 defines at least one, but preferably more, apertures 78. Apertures 78 provide for an increased mixture flow during mixing, in addition to ensuring proper blending. Moreover, this arrangement is especially advantageous when container 10, including mixing assembly 14, is utilized to store a mixture that has a tendency to separate. The apertures 78 allow the mixing device 46 to move easier in a mixture that has separated.

Alternatively, while apertures 78 are contemplated and preferred, other embodiments are considered. It is contemplated that main body portion 68 is sieve-like or reticulated, have a multiplicity of grooves or slots formed therein. Additionally, it is contemplated that main body portion 68 comprises a screen-like device, providing for greater mixture flow.

As discussed, mixing device 46 is guidingly supported in mixing assembly 14 and configured for movement within housing 12. Mixing device 46 includes whist portion 70 connected to main body portion 68 along periphery 80. In one preferred embodiment, whisk portion 70 is connected to and integral with main body portion 68 of mixing device 46, though it is contemplated that whisk portion 70 is affixed to main body portion 68 by gluing, bonding or the like.

The whisk portion 70 comprises, a plurality of spirally wound whorl-like portion 82. Each whorl-like portion 82 is formed with a stem 84 attached to periphery 80 and spirally wound wing portions 86 obliquely oriented to main body portion 68 (best seen in FIGs. 3 and 4).

Moreover, as shown in FIGs. 1 and 6, wing portions 86 are formed with separate wing members 88 which are formed at an angle to each other, preferably at a 45 degree angle, having a V-shaped appearance when viewed from the side (best seen in FIGs. 1, 4 and 6).

Turning back to FIG. 5, it is contemplated the whisk portion 82, which is configured for movement in housing 12, is spaced from inner side surface 20. This spacing, along with the plurality of apertures 78 and whorl-like portions 82 provide for maximum mixture flow during mixing. However, it also contemplated that whisk portion 70 is essentially in slidable guiding contact with inner side surface 20 (best seen in FIG. 3).

FIG. 6 portrays the relationship of cap 48, rod 44, gripping portion 56 and mixing device 46. From a careful review of FIG. 6, it can be seen that rod 44 slidingly protrudes from aperture 64 of cap 48. Moreover it is obvious that rod 44, gripping portion 56 and mixing device 46 are integrally connected, forming a single piece made of rigid plastic suitable for injection molding.

In use, mixing assembly 14 is detached from the container 10, by disengaging cap 48, and depending skirt 52, from open end 30. The user then determines what mixture to make, reading at least one set of directions 40 disposed on housing 12 to determine the ingredients.

The ingredients are then poured into chamber 18 of the container 10 in accordance with the directions 40. In one preferred embodiment, the user utilizes measuring indica 38 disposed on the container 10 to determine the proper proportions thereof. Mixing assembly 14 is then replaced in open end 30, so that mixing device 46 is now disposed in the container 10.

Finally, the ingredients are mixed using the mixing device 46. In one preferred embodiment, the user manually grips gripping portion 56 to manipulate the mixing device 46. The user sliding moves the rod 44 and mixing device 46 up and down in a reciprocal manner, and back and forth in a rotational manner.

FIG. 4 depicts the mixing device 46 in a mixing position, with rod 44 slidingly engaging cap 48. In this manner, the whisk portion 78 blends, whips and/or aerates the ingredients, forming the mixture. As an alternative embodiment, it is contemplated that rod 44 is formed with a spiral section that engages a slotted aperture 64. In this embodiment, reciprocal movement of the rod 44, simultaneous causes the mixing device 46 to rotate as the spiral portion engage the slated aperture 64.

## Claims

1. A device for **producing** a mixture in a multi-use container (10), comprising:
a generally **cylindrical** housing (12) having an opened end (30) and an opposed closed end (28), **and**
a mixing assembly (14) including a mixing device (46), said mixing assembly (14) **further including a top portion** (42) in communication with said housing (12),
wherein said mixing device (46) is guidingly supported by said top **portion** (42) **of** said mixing assembly (14) and is configured for **reciprocal and rotational** movement within said housing (12) **and** includes a whisk portion (70), **wherein said whisk portion** (70) **is connected to a main body portion** (68) **of said mixing device** (46) **along a periphery characterised in that** the whisk portion (70) of the device **comprises a plurality of spirally wound whorl-like portions** (82), **wherein each whorl-like portion** (82) **is formed with a stem** (84) **attached to said periphery and with spirally wound wing portions** (86) **obliquely orientated to said main body portion** (68), **wherein said spirally wound wing portions** (86) **are formed with separate wing members** (88) **which are formed at an angle to each other.**

2. The device of claim 1 wherein said top portion (42) has at least one aperture (64) formed therein for guidingly supporting said mixing device (46).

3. The device of claim 2 wherein said mixing assembly (14) further includes an aperture (58) in fluid communication with a pouring spout (34) formed in said housing (12).

4. The device of claim 2 wherein said mixing assembly (14) includes a rod (44) operably connected to said mixing device (46) and slidingly engaging said top portion (42).

5. The device of claim 4 wherein said mixing assembly (14) includes a gripping portion (56) in operable communication with said rod (44).

6. The device of claim 5 wherein said mixing device (14) includes a plunger portion (66) opposite said gripping portion (56) and in operable communication with said rod (44).

7. The device of claim 6 wherein said plunger (66) includes said main body portion (68) which is connected to said rod (44).

8. The device of claim 7 wherein said whisk portion (70) is essentially in sliding contact with an inside surface of said housing (12).

9. The device of claim 7 wherein said main body portion (68) includes at least one aperture (78) formed therein, whereby said aperture (78) provides for an increased mixture flow during mixing.

10. The device of any one of the preceding claims wherein said wing members (88) are formed at an angle of about 45 degrees relative to each other.

11. Use of a device according to any one of the preceding claims for producing a liquid mixture in a multi-use container.

## Patentansprüche

1. Vorrichtung zum Herstellen einer Mixtur in einem Mehrzweckbehälter (10) umfassend:
ein im Wesentlichen zylindrisches Gehäuse (12) mit einem offenen Ende (30) und einem gegenüberliegenden geschlossenen Ende (28) und
eine Mischanordnung (14) einschließlich einer Mischvorrichtung (46), wobei die Mischanordnung (14) ferner einen oberen Abschnitt (42) in Kommunikation mit dem Gehäuse (12) einschließt;
wobei die Mischvorrichtung (46) durch den oberen Abschnitt (42) der Mischanordnung (14) führend gestützt ist und für eine Hin- und Herbewegung sowie für eine Drehbewegung innerhalb des Gehäuses (12) konfiguriert ist und einen Quirlabschnitt (70) einschließt, wobei der Quirlabschnitt (70) mit einem Hauptkörperabschnitt (68) der Mischvorrichtung (46) entlang einer Peripherie verbunden ist,
**dadurch gekennzeichnet, dass**
der Quirlabschnitt (70) der Vorrichtung eine Vielzahl von spiralförmig gewundenen wirtelartigen Abschnitten (82) umfasst, wobei jeder wirtelartige Abschnitt (82) mit einem Halm (84), der an der Peripherie angebracht ist, sowie mit spiralförmig gewundenen Flügelabschnitten (86) ausgebildet ist, die schräg zu dem Hauptkörperabschnitt (68) orientiert sind, wobei die spiralförmig gewundenen Flügelabschnitte (86) mit separaten Flügelgliedern (88) ausgebildet sind, die in einem Winkel zueinander ausgebildet sind.

2. Vorrichtung nach Anspruch 1, wobei der obere Abschnitt (42) wenigstens eine Öffnung (64) aufweist, die darin ausgebildet ist, um die Mischvorrichtung (46) führend zu stützen.

3. Vorrichtung nach Anspruch 2, wobei die Mischanordnung (14) ferner eine Öffnung (58) in fluider Kommunikation mit einer Gießschnauze (34) einschließt, die in dem Gehäuse (12) ausgebildet ist.

4. Vorrichtung nach Anspruch 2, wobei die Mischanordnung (14) eine Stange (44) einschließt, die operativ mit der Mischvorrichtung (46) verbunden ist und gleitfähig den oberen Abschnitt (42) in Eingriff nimmt.

5. Vorrichtung nach Anspruch 4, wobei die Mischanordnung (14) einen Griffabschnitt (56) in operativer Kommunikation mit der Stange (44) einschließt.

6. Vorrichtung nach Anspruch 5, wobei die Mischvorrichtung (14) einen Kolbenabschnitt (66) gegenüber dem Griffabschnitt (56) und in operativer Kommunikation mit der Stange (44) einschließt.

7. Vorrichtung nach Anspruch 6, wobei der Kolben (66) den Hauptkörperabschnitt (68) einschließt, der mit der Stange (44) verbunden ist.

8. Vorrichtung nach Anspruch 7, wobei sich der Quirlabschnitt (70) im Wesentlichen in gleitender Berührung mit einer Innenseite des Gehäuses (12) befindet.

9. Vorrichtung nach Anspruch 7, wobei der Hauptkörperabschnitt (68) wenigstens eine darin ausgebildete Öffnung (78) einschließt, wobei die Öffnung (78) für einen verstärkten Mixturfluss während des Mischens sorgt.

10. Vorrichtung nach einem der vorstehenden Ansprüche, wobei die Flügelglieder (88) in einem Winkel von ungefähr 45 Grad relativ zueinander ausgebildet sind.

11. Verwendung einer Vorrichtung nach einem der vorstehenden Ansprüche zum Erstellen einer flüssigen Mixtur in einem Mehrzweckbehälter.

## Revendications

1. Dispositif pour la production d'un mélange dans un récipient à usages multiples (10), comprenant:
un réceptacle généralement cylindrique (12) ayant une extrémité ouverte (30) et une extrémité opposée fermée (28), et
un ensemble de mélange (14) comportant un dispositif mélangeur (46), ledit ensemble de mélange (14) comprenant en outre une portion supérieure (42) en communication avec ledit réceptacle (12),
tandis que ledit dispositif mélangeur (46) est supporté avec guidage par ladite portion supérieure (42) du dit ensemble de mélange (14) et est configuré pour un mouvement réciproque et rotatif dans ledit réceptacle (12) et comporte une portion formant fouet (70), ladite portion formant fouet (70) étant reliée à une portion de corps principal (68) du dit dispositif mélangeur (46) le long d'une périphérie, **caractérisé en ce que** la portion formant fouet (70) du dispositif comprend une pluralité de portions analogues à des circonvolutions à enroulement spiralé (82), tandis que chaque portion analogue à une circonvolution (82) est formée d'une tige fixée à ladite périphérie et avec des portions d'ailes enroulées en spirale (86) orientées obliquement par rapport à ladite portion de corps principal (68), lesdites portions d'ailes enroulées en spirale (86) étant formées de membres d'aile séparés (88) qui sont formés avec un angle l'un par rapport à l'autre.

2. Dispositif selon la revendication 1, dans lequel ladite portion supérieure (42) a au moins une ouverture (64) qui y est formée pour supporter avec guidage ledit dispositif mélangeur (46).

3. Dispositif selon la revendication 2, dans lequel ledit ensemble de mélange (14) comporte en outre une ouverture (58) en communication pour les fluides avec un bec verseur (34) formé dans ledit réceptacle (12).

4. Dispositif selon la revendication 2, dans lequel ledit ensemble de mélange (14) comporte une barre (44) connectée de manière opérationnelle au dit dispositif mélangeur (46) et s'engageant avec coulissement dans ladite portion supérieure (42).

5. Dispositif selon la revendication 4, dans lequel ledit ensemble de mélange (14) comporte une portion de préhension (56) en communication pour actionnement avec ladite barre (44).

6. Dispositif selon la revendication 5, dans lequel ledit ensemble de mélange (14) comporte une portion formant piston (66) faisant face à ladite portion de préhension (56) et en communication pour actionnement avec ladite barre (44).

7. Dispositif selon la revendication 6, dans lequel ledit piston (66) comporte ladite portion de corps principal (68) qui est reliée à ladite barre (44).

8. Dispositif selon la revendication 7, dans lequel ladite portion formant fouet (70) est essentiellement en contact avec coulissement avec une surface intérieure du dit réceptacle (12).

9. Dispositif selon la revendication 7, dans lequel ladite portion de corps principal (68) comporte au moins une ouverture (78) qui y est formée, tandis que ladite ouverture (78) procure un courant de mélange accru pendant le mélange.

10. Dispositif selon l'une quelconque des revendications précédentes, dans lequel lesdits membres d'aile (88) sont formés à un angle d'environ 45 degrés l'un par rapport à l'autre.

11. Utilisation d'un dispositif selon l'une quelconque des revendications précédentes pour la production d'un mélange de liquides dans un récipient à usages multiples.
